# EUROPÄISCHE PATENTSCHRIFT

(11) **EP 4 614 195 B1**
(45) Veröffentlichungstag und Bekanntmachung des Hinweises auf die Patenterteilung: **08.07.2026**
(21) Anmeldenummer: 25152169.6
(22) Anmeldetag: 16.01.2025
(51) Int. Cl.: G01V 8/14, G01S 17/02, G01S 17/04, G01V 8/20, G01S 17/06, G01S 17/42, G01S 7/48, G01S 17/00, G01S 7/497

(54) **OPTISCHER SENSOR**
OPTICAL SENSOR
CAPTEUR OPTIQUE

(30) Priorität: 08.03.2024 DE 102024106659
(43) Veröffentlichungstag der Anmeldung: 10.09.2025
(73) Patentinhaber: SICK AG, 79183 Waldkirch (DE)
(72) Erfinder: MERETTIG, Gerhard, 79350 Sexau (DE)
(74) Vertreter: Manitz Finsterwald Patent- und Rechtsanwaltspartnerschaft mbB

(56) Entgegenhaltungen:
- EP-A1- 4 286 892
- DE-A1- 10 159 932
- DE-A1- 102011 054 852
- DE-A1- 102021 002 904

## Beschreibung

Die Erfindung betrifft einen optischen Sensor zum Detektieren von Objekten, mit einer Frontscheibe, einem Lichtsender zum Aussenden von Sendelichtstrahlen durch die Frontscheibe in Richtung eines zu detektierenden Objekts, einem Lichtempfänger zum Empfangen von durch die Frontscheibe tretenden Empfangslichtstrahlen und einer elektronischen Auswertungseinheit, die mit dem Lichtempfänger in Signalverbindung steht und dazu ausgebildet ist, anhand eines Ausgangssignals des Lichtempfängers ein Detektionssignal zu erzeugen.

Optische Sensoren wie Taster oder Lichtschranken werden auf verschiedenen Gebieten der Technik dazu verwendet, vorhandene Objekte nachzuweisen und gegebenenfalls die Position und/oder eine Eigenschaft eines Objekts zu erfassen. Insbesondere bei einem Einsatz in industriellem Umfeld kann es zu Verunreinigungen der Frontscheibe kommen, welche die Detektionsfähigkeit des Sensors beeinträchtigen können. Eine Überwachung des Verunreinigungsgrads der Scheibenoberfläche ist wünschenswert, damit vor einem Funktionsausfall eine Reinigung vorgenommen werden kann.

Es hat sich jedoch gezeigt, dass sich verschiedene Arten von Verunreinigungen sowie verschiedene Ausmaße von Verunreinigung in beträchtlichem Maße unterschiedlich auf die Detektion auswirken können. Der Verunreinigungsgrad ist demgemäß nicht immer ein zuverlässiger Indikator für die Notwendigkeit eines Reinigungsprozesses. Für den Betreiber einer Anlage, die mit einem gattungsgemäßen optischen Sensor versehen ist, ist es gegebenenfalls aufwändig und kostspielig, eine Reinigung durchzuführen, obwohl dies noch gar nicht zwingend erforderlich ist.

Die EP 4 286 892 A1 offenbart ein Verfahren zum Detektieren von Schlieren auf den Scheiben von LiDAR-Sensoren, bei dem das Echo der Scheibe mit einem Referenzwert verglichen wird und zeitliche Veränderungen der Detektionsstärke erkannt werden.

In der DE 10 2021 002904 A1 ist ein Verfahren zur Ermittlung alterungsbedingter Funktionsbeeinträchtigungen eines LiDAR-Sensors offenbart, bei dem ein reflektives Messobjekt in einem festgelegten Abstand vermessen wird und die dabei ermittelte Rückstrahlleistung als Referenzwert gespeichert wird.

Die DE 101 59 932 A1 offenbart ein Verfahren zur Störlichtkorrektur bei einem optischen Sensor, wobei aus reflektierten Anteilen der empfangenen Lichtsignale ein Abtastwert erzeugt wird.

Es ist eine Aufgabe der Erfindung, einen effizienteren Betrieb von optischen Sensoren in verschmutzungsträchtigen Umgebungen zu ermöglichen.

Die Lösung der Aufgabe erfolgt durch einen optischen Sensor mit den Merkmalen des Anspruchs 1.

Erfindungsgemäß ist die Auswertungseinheit dazu ausgebildet, anhand eines Vergleichs des erzeugten Detektionssignals mit einem erwarteten Detektionssignal ein Detektionsbeeinträchtigungssignal zu erzeugen, das eine Beeinträchtigung der Detektionsqualität durch Verunreinigungen der Frontscheibe angibt.

Der Vergleich des tatsächlichen Detektionssignals mit dem zu erwartenden Detektionssignal ermöglicht es, die Wirkung der vorhandenen Verunreinigungen auf die Detektion zu bestimmen. Mit dem Detektionsbeeinträchtigungssignal steht also ein Signal zur Verfügung, das nicht für den Grad der Verunreinigung charakteristisch ist, sondern für die Verschlechterung der Detektion aufgrund der Verunreinigung.

Dies ermöglicht eine besonders zuverlässige und bedarfsgerechte Beurteilung der Verschmutzungssituation und somit eine verbesserte Planung von Reinigungsprozessen. Beispielsweise kann eine Reinigung der Frontscheibe trotz relativ starker Verunreinigung aufgeschoben werden, wenn das Detektionsbeeinträchtigungssignal angibt, dass die Beeinträchtigung der Detektionsqualität noch akzeptabel ist. Unnötige Reinigungsprozesse können somit vermieden werden. Umgekehrt könnte eine Reinigung trotz eines relativ geringen Verunreinigungsgrads notwendig sein, weil die Beeinträchtigung der Detektionsqualität aufgrund der Art der Verunreinigung besonders ausgeprägt ist. Auch einem solchen Fall wird durch das Detektionsbeeinträchtigungssignal Rechnung getragen.

Das erwartete Detektionssignal kann auf Trainingsdaten beruhen. Beispielsweise könnte ein tatsächliches Detektionssignal, das in einer der späteren Anwendung entsprechenden Situation bei nicht verunreinigter Frontscheibe erzeugt wurde, als erwartetes Detektionssignal gespeichert sein.

Vorzugsweise ist das Detektionsbeeinträchtigungssignal ein mehrstufiges digitales Signal oder ein analoges Signal. Im Gegensatz zu einem binären Signal, das lediglich eine Unterscheidung zwischen zwei Zuständen erlaubt, vermittelt ein mehrstufiges oder analoges Signal einem Nutzer weitergehendere Informationen hinsichtlich der Detektionsqualität. Eine wenigstens fünffache und vorzugsweise achtfache Abstufung hat sich als besonders günstig erwiesen.

Ein erfindungsgemäßer optischer Sensor kann als Triangulationssensor ausgeführt sein.

Der Vergleich des erzeugten Detektionssignals mit dem erwarteten Detektionssignal umfasst eine Differenzbildung von jeweiligen, aus den Detektionssignalen abgeleiteten Objektpositionswerten. Bei den Objektpositionswerten kann es sich um Abstandswerte zu einem Objekt handeln, die der nach dem Triangulationsprinzip arbeitende optische Sensor ermittelt. Verunreinigungen der Frontscheibe können das Detektionssignal derart verändern, dass es zu einer Verschiebung des Abstandswerts kommt. Durch die Differenzbildung wird diese Verschiebung, die ein Maß für die Verschlechterung der Detektionsfähigkeit des Sensors ist, festgestellt.

Die Auswertungseinheit kann dazu ausgebildet sein, das erzeugte Detektionssignal zeitlich zu mitteln und den betreffenden Objektpositionswert aus dem zeitlich gemittelten Detektionssignal abzuleiten. Kurzfristige Störungen fallen dann weniger ins Gewicht und es ergibt sich ein verbessertes Signal-Rausch-Verhältnis.

Gemäß einer Ausführungsform der Erfindung umfasst der Vergleich des erzeugten Detektionssignals mit dem erwarteten Detektionssignal das Ermitteln eines geometrischen Objektpositions-Fehlers und einer energetischen Signalverschlechterung. Der geometrische Objektpositions-Fehler kann durch eine Verschiebung der Abstandswerte eines Triangulationssensors wie vorstehend erläutert gegeben sein. Eine energetische Signalverschlechterung tritt - unabhängig von einer Positionswert-Verschiebung - durch Verringerung des Signalpegels im Verhältnis zum Hintergrundrauschen auf. Bei der Erzeugung des Detektionsbeeinträchtigungssignals können die beiden Fehler in Abhängigkeit von der Anwendung berücksichtigt werden.

Beispielsweise kann zur Erzeugung des Detektionsbeeinträchtigungssignals der geometrische Objektpositions-Fehler stärker gewichtet werden als die energetische Signalverschlechterung. Dies trägt dem Umstand Rechnung, dass eine falsche Objektposition aus Anwendersicht schwerwiegender ist als eine Verringerung der Signalstärke.

Gemäß einer weiteren Ausführungsform der Erfindung ist die Auswertungseinheit derart ausgebildet, dass sie bei der Erzeugung des Detektionssignals zunächst das Ausgangssignal des Lichtempfängers zur Kompensation von Verunreinigungen der Frontscheibe mittels Signalverarbeitung modifiziert, so dass das Detektionsbeeinträchtigungssignal die Beeinträchtigung der Detektionsqualität durch die Verunreinigungen der Frontscheibe unter Berücksichtigung der Kompensation angibt. Die Beeinträchtigung der Detektionsqualität ist bei gleicher Verunreinigung umso geringer, je besser die Kompensation durch Signalverarbeitung funktioniert. Ein Detektionsbeeinträchtigungssignal, bei dem die Kompensation berücksichtigt ist, gibt die verbliebene Detektionsverschlechterung an. Von Vorteil ist insbesondere, dass der Benutzer des Sensors bei einer Erweiterung oder Verbesserung der Kompensation durch einen zusätzlichen Signalverarbeitungsprozess keine Anpassungen vornehmen muss, wie es bei Heranziehen eines reinen Verunreinigungssignals der Fall wäre. Im Detektionsbeeinträchtigungssignal sind nämlich automatisch alle tatsächlich angewandten Kompensationsmaßnahmen berücksichtigt.

Es kann vorgesehen sein, dass der Lichtempfänger mehrere Empfangselemente aufweist und die Signalverarbeitung eine unterschiedliche Gewichtung von Einzelsignalen der Empfangselemente umfasst. Insbesondere kann der Lichtempfänger als Zeilensensor ausgeführt sein. Bei einem Triangulationssensor trifft ein Empfangslichtfleck in Abhängigkeit vom Objektabstand auf eine bestimmte Stelle des Zeilensensors. Für den Fall, dass bestimmte Abstandsbereiche anwendungsbedingt ausgeschlossen sind, können von diesen Bereichen stammende Einzelsignale abgeschwächt werden oder unberücksichtigt bleiben, um so zum Beispiel die Auswirkung von verunreinigungsbedingtem Streulicht zu reduzieren, das Signal-Rausch-Verhältnis zu verbessern und dadurch die Kompensation durchzuführen. Die Auswertungseinheit kann auch dazu ausgebildet sein, Einzelsignale, die einen vorgegebenen Schwellenwert nicht erreichen, bei der Erzeugung des Detektionssignals nicht zu berücksichtigen. Es versteht sich, dass vielfältige weitere Arten zur unterschiedlichen Gewichtung der Einzelsignale möglich sind.

Eine spezielle Ausgestaltung der Erfindung sieht vor, dass der optische Sensor einen zusätzlichen Lichtsender mit einer diffusen Strahlungscharakteristik aufweist und die Signalverarbeitung eine Auswertung eines auf den zusätzlichen Lichtsender zurückzuführenden Empfangssignals umfasst. Das Streulicht einer verunreinigten Frontscheibe erzeugt in Verbindung mit einem außerhalb des Sendestrahls befindlichen Objekt eine Störstrahlung. Der zusätzliche Lichtsender erzeugt ein ähnliches Signal. Wenn dieses mit negativer Wertung berücksichtigt wird, ergibt sich eine Verringerung der von der Verschmutzung hervorgerufenen Wirkung. Außerdem besteht die Möglichkeit, das Verhältnis des Signals des zusätzlichen Lichtsenders und des streulichtbedingten Störsignals zu ermitteln und daraus einen Wert für die Beeinträchtigung der Detektionsqualität abzuleiten.

Die Auswertungseinheit kann dazu ausgebildet sein, das Detektionsbeeinträchtigungssignal anhand eines Verunreinigungsgrads der Frontscheibe und einer gespeicherten Abhängigkeit der Beeinträchtigung der Detektionsqualität vom Verunreinigungsgrad zu erzeugen. Der Verunreinigungsgrad kann beispielsweise mittels einer Streulichtmessung ermittelt werden.

Die Abhängigkeit der Beeinträchtigung der Detektionsqualität vom Verunreinigungsgrad kann durch eine nichtlineare Übertragungsfunktion gegeben sein. Insbesondere kann die Auswertungseinheit eine Speichereinrichtung aufweisen, in welcher die nichtlineare Übertragungsfunktion gespeichert ist, beispielsweise in Form einer Berechnungsvorschrift oder einer Wertetabelle. Die Übertragungsfunktion kann auch mittels künstlicher Intelligenz (KI) erstellt oder optimiert werden.

Gemäß einer speziellen Ausgestaltung der Erfindung ist die Auswertungseinheit dazu ausgebildet, die Abhängigkeit der Beeinträchtigung der Detektionsqualität vom Verunreinigungsgrad unter Verwendung von Trainingsdaten zu bestimmen. In einem Trainingszyklus können für bekannte Verunreinigungsarten jeweilige Beeinträchtigungen der Detektionsqualität ermittelt werden. Im späteren Nutzbetrieb des Sensors kann die Beeinträchtigung der Detektionsqualität leicht über die entsprechende Zuordnung gefunden werden.

Die Auswertungseinheit kann dazu ausgebildet sein, ein Schaltsignal zu erzeugen, wenn das Detektionsbeeinträchtigungssignal einen Schwellenwert überschreitet. Das Schaltsignal kann zum Beispiel optisch und/oder akustisch ausgegeben werden, beispielsweise durch eine blinkende Leuchtdiode oder dergleichen. Ein Benutzer weiß dann, dass die Verschlechterung der Detektionsqualität kritisch geworden ist. Demgemäß kann der Benutzer geeignete Maßnahmen ergreifen, also zum Beispiel eine Reinigung der Frontscheibe veranlassen. Es ist von Vorteil, wenn die betreffende Umrechnung eine Hysterese aufweist.

Weiterbildungen der Erfindung sind auch den abhängigen Ansprüchen, der Beschreibung, sowie den beigefügten Zeichnungen zu entnehmen.

Die Erfindung wird nachfolgend beispielhaft unter Bezugnahme auf die Zeichnungen beschrieben.
- Fig. 1: zeigt einen erfindungsgemäßen optischen Sensor.
- Fig. 2: zeigt elektronische Module des optischen Sensors gemäß Fig. 1.
- Fig. 3: zeigt einen Zusammenhang zwischen einem Verunreinigungsgrad der Frontscheibe und einem Detektionsbeeinträchtigungsgrad bei einem erfindungsgemäßen optischen Sensor.
- Fig. 4: zeigt beispielhafte Einzelsignale von Empfangselementen des optischen Sensors gemäß Fig. 1 ohne Verunreinigungen der Frontscheibe.
- Fig. 5: zeigt die Einzelsignale gemäß Fig. 4 bei vorhandenen Verunreinigungen der Frontscheibe.

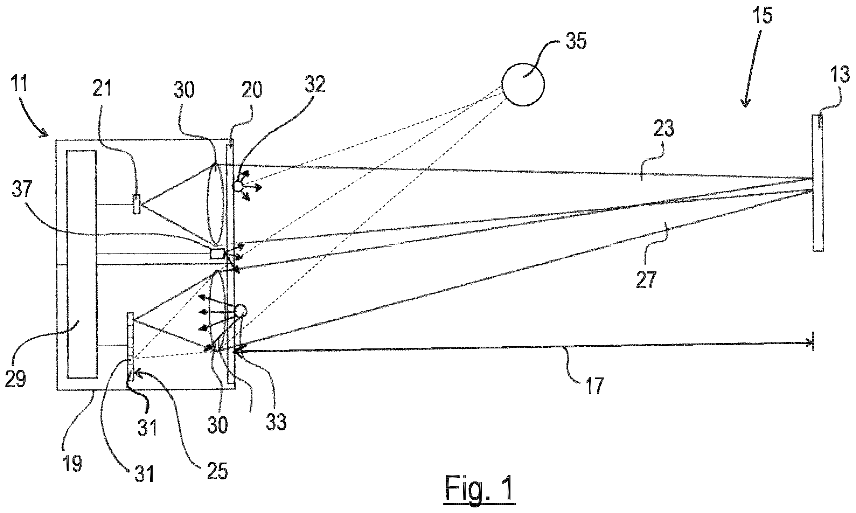

Der in Fig. 1 dargestellte, gemäß einer Ausführungsform der Erfindung gestaltete optische Sensor 11 dient zum Detektieren von Objekten 13 in einem Überwachungsraum 15 und insbesondere zum Ermitteln des Abstands 17 zwischen dem Objekt 13 und dem optischen Sensor 11 mittels Triangulation. Der optische Sensor 11 weist ein Gehäuse 19 mit einer Frontscheibe 20 auf. In dem Gehäuse 19 sind ein Lichtsender 21 zum Aussenden von Sendelichtstrahlen 23 durch die Frontscheibe 20 in Richtung eines zu detektierenden Objekts 13, ein Lichtempfänger 25 zum Empfangen von durch die Frontscheibe 20 tretenden Empfangslichtstrahlen 27 und eine elektronische Auswertungseinheit 29 untergebracht. Ferner sind dem Lichtsender 21 und dem Lichtempfänger 25 jeweilige Linsen 30 zur Strahlformung zugeordnet. Die Frontscheibe 20 ist aus einem Material gefertigt, das zumindest im Spektralbereich der Sendelichtstrahlen 23 und der Empfangslichtstrahlen 27 transparent ist.

Die elektronische Auswertungseinheit 29 steht mit dem Lichtempfänger 25 in Signalverbindung und ist dazu ausgebildet, anhand eines Ausgangssignals des Lichtempfängers 25 ein Detektionssignal zu erzeugen, das zum Beispiel das Vorhandensein des Objekts 13 im Überwachungsraum 15 oder den Abstand 17 angibt.

Bei dem Lichtsender 21 kann es sich um eine Leuchtdiode oder um eine Laserdiode handeln. Der Lichtempfänger 25 weist mehrere separate Empfangselemente 31 auf, die in Abhängigkeit von der auf sie auftreffenden Lichtintensität jeweilige Einzelsignale ausgeben. Beispielsweise kann der Lichtempfänger 25 als Zeilensensor ausgeführt sein, der in Triangulationsrichtung ausgerichtet ist, wie es hier gezeigt ist.

Beim Betrieb des optischen Sensors 11 kann es zu Verunreinigungen der Frontscheibe 20, beispielsweise in Form von Wasser, Fett oder Staub, kommen. In Fig. 1 sind eine senderseitige Verunreinigung 32 und eine empfängerseitige Verunreinigung 33 in schematischer Form dargestellt. Durch die senderseitige Verunreinigung 32 wird das Bündel der Sendelichtstrahlen 23 aufgeweitet, wie durch Pfeile dargestellt ist. Ein Teil des aufgeweiteten Strahlenbündels kann auf ein Störobjekt 35 auftreffen und von diesem in Richtung Lichtempfänger 25 reflektiert werden, was durch gestrichelte Linien gezeigt ist. Dadurch ergibt sich ein Fehlsignal und eine Dämpfung des Nutzsignals. Empfängerseitige Verunreinigungen 33 weiten das Bündel der Empfangsstrahlen 23 auf und bewirken somit eine Signalanhebung auf mehreren oder allen Empfangselementen 31, die eigentlich kein Signal erhalten würden, wenn keine empfängerseitige Verunreinigung 33 vorhanden wäre. Dadurch kann eine Verfälschung zum Beispiel einer Abstandsmessung verursacht werden.

Zur Kompensation der von Verunreinigungen 32, 33 der Frontscheibe 20 verursachten Signalverfälschungen ist der gezeigte optische Sensor 11 mit einem zusätzlichen Lichtsender 37 ausgestattet, der eine diffuse Strahlungscharakteristik aufweist (durch Pfeile gezeigt). Der zusätzliche Lichtsender 37 strahlt in ähnlicher Weise wie die senderseitige Verunreinigung 32 diffuses Licht ab. Wenn das Signal des zusätzlichen Lichtsenders 37 negativ bewertet wird, kann die verunreinigungsbedingte Strahlung kompensiert werden. Außerdem kann anhand des auf den zusätzlichen Lichtsender 37 zurückzuführenden Signals der Verunreinigungsgrad der Frontscheibe 20 ermittelt werden.

Eine weitere Möglichkeit zur Kompensation der von Verunreinigungen 32, 33 der Frontscheibe 20 verursachten Signalverfälschungen besteht darin, die Einzelsignale der Empfangselemente 31 unterschiedlich zu gewichten.

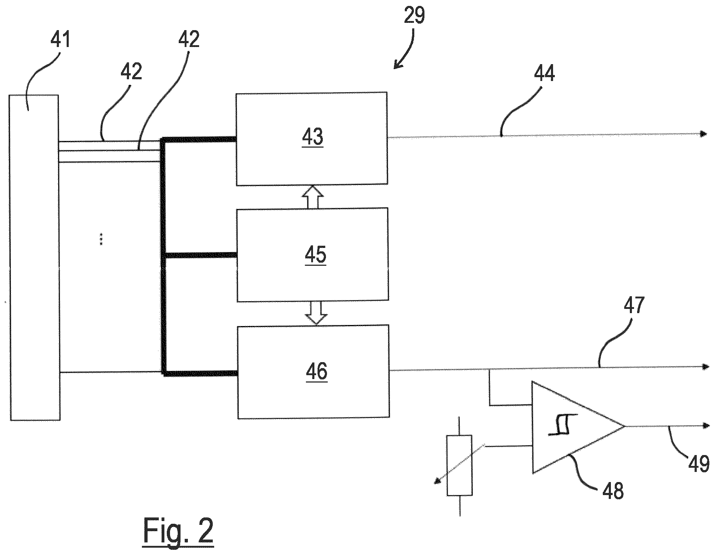

Die Auswertungseinheit 29 ist zum Erzeugen eines Detektionsbeeinträchtigungssignals anhand eines Vergleichs des erzeugten Detektionssignals mit einem erwarteten Detektionssignal ausgebildet, wie nachfolgend unter Bezugnahme auf Fig. 2 näher ausgeführt wird, die elektronische Module des optischen Sensors gemäß Fig. 1 zeigt, wie sie zum Beispiel in der Auswertungseinheit 29 integriert sein können. Insbesondere kann die Auswertungseinheit 29 ein Empfangsmodul 41 aufweisen, das die Empfangssignale 42 erzeugt. Ein Detektionsmodul 43 empfängt die Empfangssignale 42 und erzeugt das Detektionssignal 44. Ferner weist die Auswertungseinheit 29 ein Kompensationsmodul 45 auf, das die Empfangssignale 42 zur Kompensation von Verunreinigungen 32, 33 (Fig. 1) mittels Signalverarbeitung modifiziert. Ein Bewertungsmodul 46 der Auswertungseinheit 29 erzeugt das Detektionsbeeinträchtigungssignal 47, welches die Beeinträchtigung der Detektionsqualität durch die Verunreinigungen 32, 33 der Frontscheibe 20 unter Berücksichtigung der Kompensation angibt. Es wird also nicht das Ausmaß an Verunreinigungen 32, 33 ermittelt, sondern die Auswirkung der Verunreinigungen 32, 33 auf das Detektionsergebnis.

Vorzugsweise ist das Detektionsbeeinträchtigungssignal 47 ein mehrstufiges digitales Signal oder ein analoges Signal. Bei dem Vergleich des erzeugten Detektionssignals 44 mit dem erwarteten Detektionssignal können der geometrische Objektpositions-Fehler, also die Abstandsänderung, und die energetische Signalverschlechterung, also die Energiereduktion, separat berücksichtigt werden.

Beispielsweise kann das Detektionsbeeinträchtigungssignal 47 auf der folgenden achtstufigen Werteskala beruhen:
1: Abstandsänderung bis 2% und Energiereduktion bis 10%
2: Abstandsänderung bis 5% und Energiereduktion bis 20%
3: Abstandsänderung bis 5% und Energiereduktion bis 30%
4: Abstandsänderung bis 10% und Energiereduktion bis 30%
5: Abstandsänderung bis 15% und Energiereduktion bis 40%
6: Abstandsänderung bis 20% und Energiereduktion bis 40%
7: Abstandsänderung bis 30% und Energiereduktion bis 50%
8: Abstandsänderung bis 30% und Energiereduktion bis 50%

Es könnten hierbei auch Zwischenwerte ausgegeben werden. Bei Bedarf könnten ferner eine höherwertige Werteskala oder andere Wertzuordnungen vorgesehen sein.

Die Auswertungseinheit 29 weist im gezeigten Fall auch ein Schaltmodul 48 auf, das dazu ausgebildet ist, ein Schaltsignal 49 auszugeben, wenn das Detektionsbeeinträchtigungssignal 47 einen Schwellenwert überschreitet. Das Schaltsignal 49 kann optisch und/oder akustisch ausgegeben werden. Der Benutzer weiß dann, dass eine Reinigung der Frontscheibe 20 notwendig ist. Vorzugsweise ist der Schwellenwert einstellbar. Alternativ oder zusätzlich kann das Schaltsignal auch zum Beispiel elektronisch weiterverwertet werden, um zum Beispiel eine Notabschaltung auszulösen, wenn die Detektionsbeeinträchtigung untragbar groß ist.

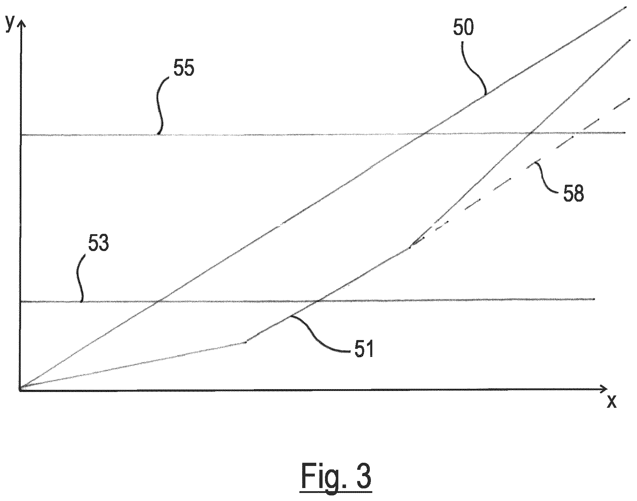

Die Auswertungseinheit 29 kann dazu ausgebildet sein, das Detektionsbeeinträchtigungssignal 47 anhand eines Verunreinigungsgrads der Frontscheibe 20 und einer gespeicherten Abhängigkeit der Beeinträchtigung der Detektionsqualität vom Verunreinigungsgrad zu erzeugen, wie nachfolgend unter Bezugnahme auf Fig. 3 erläutert wird. In dem Diagramm der Fig. 3 bezeichnet die x-Achse den Verunreinigungsgrad und die y-Achse einen Wert für die Detektionsbeeinträchtigung. Die Gerade 50 repräsentiert einen linearen Zusammenhang. Im Unterschied hierzu kann die Abhängigkeit der Beeinträchtigung der Detektionsqualität vom Verunreinigungsgrad durch eine nichtlineare Übertragungsfunktion 51 gegeben sein. Im Allgemeinen darf für eine ordnungsgemäße Funktion des optischen Sensors 11 die Detektionsbeeinträchtigung einen ersten Schwellenwert 53 nicht überschreiten. Aufgrund von Kompensationsmaßnahmen wie vorstehend beschrieben wird dieser Wert später erreicht als es allein aufgrund der Verschmutzung zu erwarten ist. Dies kommt in dem Abstand der nichtlinearen Übertragungsfunktion 51 von der Gerade 50 zum Ausdruck.

Wenn in einer bestimmten Anwendung eine geringere Präzision erforderlich ist, kann ein höherer zweiter Schwellenwert 55 zugrunde gelegt werden. Auch in diesem Fall ist eine spätere Reinigung möglich. Bei der dargestellten Übertragungsfunktion 51 ist der Effekt aber nicht mehr so ausgeprägt wie unter Zugrundelegung des ersten Schwellenwerts 53, weil die Wirkung der Kompensationsmaßnahmen im Allgemeinen bei stärkeren Verunreinigungen nachlässt.

Wenn eine neue Kompensationsmaßnahme zur Verfügung gestellt wird, verändert sich die nichtlineare Übertragungsfunktion 51, wie in Fig. 3 durch die gestrichelte Linie 58 angegeben ist. Der Zeitraum bis zur erforderlichen Reinigung verlängert sich, ohne dass der Benutzer eine Werteverstellung vornehmen muss. Die Verbesserung des Sensorbetriebs erfolgt aus Sicht des Betreibers also automatisch.

Die Auswertungseinheit 29 kann dazu ausgebildet sein, die Abhängigkeit der Beeinträchtigung der Detektionsqualität vom Verunreinigungsgrad, insbesondere die nichtlineare Übertragungsfunktion 51, unter Verwendung von Trainingsdaten zu bestimmen. So kann die nichtlineare Übertragungsfunktion 51 in einem Trainingszyklus für bekannte Verunreinigungsarten aus dem ermittelten Verunreinigungsgrad und der zugehörigen Detektionsbeeinträchtigung ermittelt werden. Im späteren Nutzbetrieb des optischen Sensors 11 kann dann aus einem ermittelten Verunreinigungsgrad die Detektionsbeeinträchtigung abgeleitet werden. Die Übertragungsfunktion 51 kann je nach Anwendung als Zuordnungsvorschrift, Wertetabelle oder Algorithmus gegeben sein. Sie kann auch mittels künstlicher Intelligenz (KI) erstellt sein.

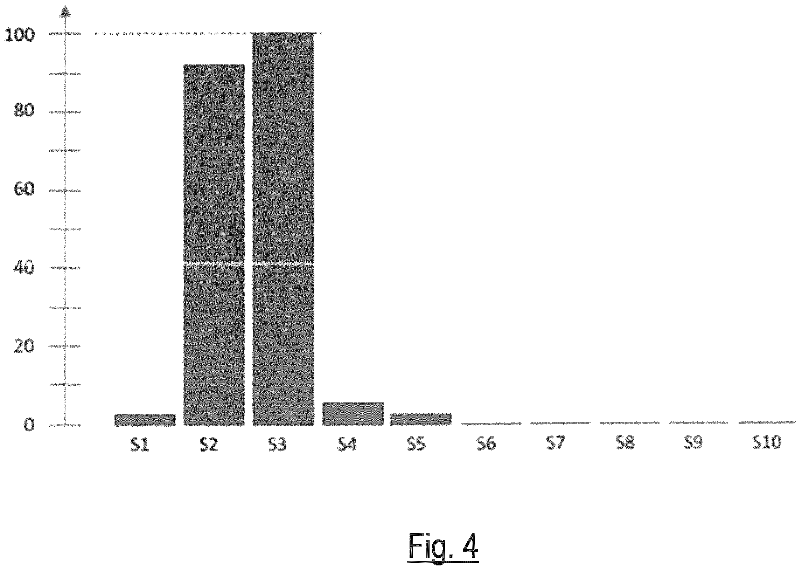

Der vorstehend genannte Vergleich des Detektionssignals 44 mit dem erwarteten Detektionssignal umfasst eine Differenzbildung von jeweiligen, aus den Detektionssignalen abgeleiteten Objektpositionswerten. Fig. 4 zeigt Einzelsignale S1-S10 der Empfangselemente 31 für eine beispielhafte Anwendungssituation ohne Verunreinigungen 32, 33 der Frontscheibe 20, wobei an der vertikalen Achse Prozentwerte der Signalstärke angegeben sind. Dies entspricht für diese Situation dem erwarteten Signal.

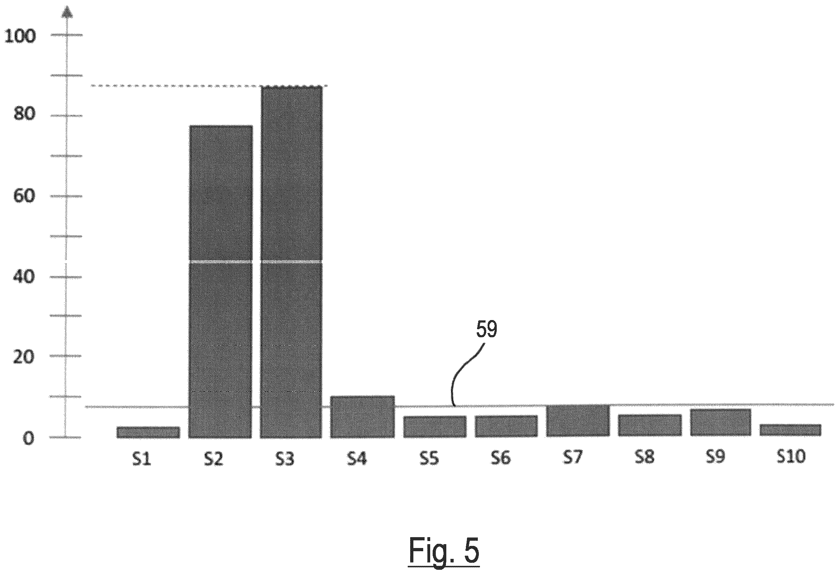

Eine Verunreinigung 32, 33 führt nun beispielsweise dazu, dass wie in Fig. 5 gezeigt das stärkste Einzelsignal S3 geringer ausfällt und zudem die Einzelsignale S4-S10 angestiegen sind. Bei einer Bestimmung der Objektposition anhand des Medians der Einzelsignale S1-S10 ergibt sich durch die Verunreinigungen 32, 33 eine Verschiebung des Medians nach rechts und zusätzlich eine Verschlechterung des Signal-Rausch-Verhältnisses.

Zur Kompensation könnten alle Einzelsignale, die kleiner als max(S6... S10) sind, bei der Nutzsignalermittlung unberücksichtigt bleiben, wie durch die Linie 59 gezeigt ist. Eine andere Kompensationsmaßnahme besteht darin, dass jedes Einzelsignal, das kleiner als ein vorbestimmter Höchstwert ist, über eine längere Zeitspanne gemittelt wird und der gemittelte Wert vom aktuellen Messwert abgezogen wird.

Der in Fig. 1 dargestellte optische Sensor 11 ist ein Triangulationssensor. Das beschriebene Erzeugen eines Detektionsbeeinträchtigungssignals 47 kann jedoch auch bei anderen Sensortypen vorteilhaft sein. Im Gegensatz zu einem reinen Verunreinigungssignal ermöglicht die Verwendung des Detektionsbeeinträchtigungssignals 47 eine optimale Planung des Reinigungszeitpunkts. Durch Einführung zusätzlicher Kompensationsmaßnahmen verlängern sich die Zeitspannen zwischen den Reinigungsprozessen automatisch, was dem Betreiber Zeit und Kosten spart.

### Bezugszeichenliste:

- 11: optischer Sensor
- 13: Objekt
- 15: Überwachungsraum
- 17: Abstand
- 19: Gehäuse
- 20: Frontscheibe
- 21: Lichtsender
- 23: Sendelichtstrahlen
- 25: Lichtempfänger
- 27: Empfangslichtstrahlen
- 29: elektronische Auswertungseinheit
- 30: Linse
- 31: Empfangselement
- 32: senderseitige Verunreinigung
- 33: empfängerseitige Verunreinigung
- 35: Störobjekt
- 37: zusätzlicher Lichtsender
- 41: Empfangsmodul
- 42: Empfangssignal
- 43: Detektionsmodul
- 44: Detektionssignal
- 45: Kompensationsmodul
- 46: Bewertungsmodul
- 47: Detektionsbeeinträchtigungssignal
- 48: Schaltmodul
- 49: Schaltsignal
- 50: Gerade
- 51: nichtlineare Übertragungsfunktion
- 53: erster Schwellenwert
- 55: zweiter Schwellenwert
- 58: gestrichelte Linie
- 59: Linie

## Patentansprüche

1. Optischer Sensor (11) zum Detektieren von Objekten (13), mit einer Frontscheibe (20), einem Lichtsender (21) zum Aussenden von Sendelichtstrahlen (23) durch die Frontscheibe (20) in Richtung eines zu detektierenden Objekts (13), einem Lichtempfänger (25) zum Empfangen von durch die Frontscheibe (20) tretenden Empfangslichtstrahlen (27) und einer elektronischen Auswertungseinheit (29), die mit dem Lichtempfänger (25) in Signalverbindung steht und dazu ausgebildet ist, anhand eines Ausgangssignals (42) des Lichtempfängers (25) ein Detektionssignal (44) zu erzeugen,
**dadurch gekennzeichnet, dass**
die Auswertungseinheit (29) ferner dazu ausgebildet ist, anhand eines Vergleichs des erzeugten Detektionssignals (44) mit einem erwarteten Detektionssignal ein Detektionsbeeinträchtigungssignal (47) zu erzeugen, das eine Beeinträchtigung der Detektionsqualität durch Verunreinigungen (32, 33) der Frontscheibe (20) angibt,
wobei der Vergleich des erzeugten Detektionssignals (44) mit dem erwarteten Detektionssignal eine Differenzbildung von jeweiligen, aus den Detektionssignalen abgeleiteten Objektpositionswerten umfasst.

2. Optischer Sensor nach Anspruch 1,
wobei das Detektionsbeeinträchtigungssignal (47) ein mehrstufiges digitales Signal oder ein analoges Signal ist.

3. Optischer Sensor nach Anspruch 1 oder 2,
wobei die Auswertungseinheit (29) dazu ausgebildet ist, das erzeugte Detektionssignal (44) zeitlich zu mitteln und den betreffenden Objektpositionswert aus dem zeitlich gemittelten Detektionssignal abzuleiten.

4. Optischer Sensor nach einem der vorstehenden Ansprüche,
wobei der Vergleich des erzeugten Detektionssignals (44) mit dem erwarteten Detektionssignal das Ermitteln eines geometrischen Objektpositions-Fehlers und einer energetischen Signalverschlechterung umfasst.

5. Optischer Sensor nach Anspruch 4,
wobei zur Erzeugung des Detektionsbeeinträchtigungssignals (47) der geometrische Objektpositions-Fehler stärker gewichtet wird als die energetische Signalverschlechterung.

6. Optischer Sensor nach einem der vorstehenden Ansprüche,
wobei die Auswertungseinheit (29) derart ausgebildet ist, dass sie bei der Erzeugung des Detektionssignals (44) zunächst das Ausgangssignal (42) des Lichtempfängers (25) zur Kompensation von Verunreinigungen (32, 33) der Frontscheibe (20) mittels Signalverarbeitung modifiziert,
so dass das Detektionsbeeinträchtigungssignal (47) die Beeinträchtigung der Detektionsqualität durch die Verunreinigungen (32, 33) der Frontscheibe (20) unter Berücksichtigung der Kompensation angibt.

7. Optischer Sensor nach Anspruch 6,
wobei der Lichtempfänger (25) mehrere Empfangselemente (31) aufweist und die Signalverarbeitung eine unterschiedliche Gewichtung von Einzelsignalen (42) der Empfangselemente (31) umfasst.

8. Optischer Sensor nach Anspruch 6 oder 7,
wobei der optische Sensor (11) einen zusätzlichen Lichtsender (37) mit einer diffusen Strahlungscharakteristik aufweist und die Signalverarbeitung eine Auswertung eines auf den zusätzlichen Lichtsender (37) zurückzuführenden Empfangssignals umfasst.

9. Optischer Sensor nach einem der vorstehenden Ansprüche,
wobei die Auswertungseinheit (29) dazu ausgebildet ist, das Detektionsbeeinträchtigungssignal (47) anhand eines Verunreinigungsgrads der Frontscheibe (20) und einer gespeicherten Abhängigkeit der Beeinträchtigung der Detektionsqualität vom Verunreinigungsgrad zu erzeugen.

10. Optischer Sensor nach Anspruch 9,
wobei die Abhängigkeit der Beeinträchtigung der Detektionsqualität vom Verunreinigungsgrad durch eine nichtlineare Übertragungsfunktion (51) gegeben ist.

11. Optischer Sensor nach Anspruch 9 oder 10,
wobei die Auswertungseinheit (29) dazu ausgebildet ist, die Abhängigkeit der Beeinträchtigung der Detektionsqualität vom Verunreinigungsgrad unter Verwendung von Trainingsdaten zu bestimmen.

12. Optischer Sensor nach einem der vorstehenden Ansprüche,
wobei die Auswertungseinheit (29) dazu ausgebildet ist, ein Schaltsignal (49) zu erzeugen, wenn das Detektionsbeeinträchtigungssignal (47) einen Schwellenwert überschreitet.

## Claims

1. An optical sensor (11) for detecting objects (13), comprising a front screen (20), a light transmitter (21) for transmitting transmitted light beams (23) through the front screen (20) toward an object (13) to be detected, a light receiver (25) for receiving received light beams (27) passing through the front screen (20) and an electronic evaluation unit (29) which is in signal communication with the light receiver (25) and is configured to generate a detection signal (44) based on an output signal (42) of the light receiver (25),
**characterized in that**
the evaluation unit (29) is further configured to generate, based on a comparison of the generated detection signal (44) with an expected detection signal, a detection impairment signal (47) which indicates an impairment of the detection quality due to contaminants (32, 33) of the front screen (20),
wherein the comparison of the generated detection signal (44) with the expected detection signal comprises forming a difference between respective object position values derived from the detection signals.

2. An optical sensor according to claim 1,
wherein the detection impairment signal (47) is a multi-level digital signal or an analog signal.

3. An optical sensor according to claim 1 or 2,
wherein the evaluation unit (29) is configured to time-average the generated detection signal (44) and to derive the relevant object position value from the time-averaged detection signal.

4. An optical sensor according to any one of the preceding claims,
wherein the comparison of the generated detection signal (44) with the expected detection signal comprises determining a geometric object position error and an energetic signal degradation.

5. An optical sensor according to claim 4,
wherein, for generating the detection impairment signal (47), the geometric object position error is weighted more heavily than the energetic signal degradation.

6. An optical sensor according to any one of the preceding claims,
wherein the evaluation unit (29) is configured such that, when generating the detection signal (44), it first modifies the output signal (42) of the light receiver (25) by means of signal processing to compensate for contaminants (32, 33) of the front screen (20),
such that the detection impairment signal (47) indicates the impairment of the detection quality caused by the contaminants (32, 33) of the front screen (20), taking the compensation into account.

7. An optical sensor according to claim 6,
wherein the light receiver (25) has a plurality of receiving elements (31) and the signal processing comprises a different weighting of individual signals (42) of the receiving elements (31).

8. An optical sensor according to claim 6 or 7,
wherein the optical sensor (11) has an additional light transmitter (37) with a diffuse radiation characteristic and the signal processing comprises an evaluation of a received signal attributable to the additional light transmitter (37).

9. An optical sensor according to any one of the preceding claims,
wherein the evaluation unit (29) is configured to generate the detection impairment signal (47) based on a degree of contamination of the front screen (20) and a stored dependence of the impairment of the detection quality on the degree of contamination.

10. An optical sensor according to claim 9,
wherein the dependence of the impairment of the detection quality on the degree of contamination is given by a nonlinear transfer function (51).

11. An optical sensor according to claim 9 or 10,
wherein the evaluation unit (29) is configured to establish the dependence of the impairment of the detection quality on the degree of contamination using training data.

12. An optical sensor according to any one of the preceding claims,
wherein the evaluation unit (29) is configured to generate a switching signal (49) when the detection impairment signal (47) exceeds a threshold value.

## Revendications

1. Capteur optique (11) destiné à détecter des objets (13), comprenant une vitre avant (20), un émetteur de lumière (21) destiné à émettre des faisceaux lumineux d'émission (23) à travers la vitre avant (20) en direction d'un objet (13) à détecter, un récepteur de lumière (25) destiné à recevoir des faisceaux lumineux de réception (27) traversant la vitre avant (20) et une unité d'évaluation électronique (29) qui est en liaison de signal avec le récepteur de lumière (25) et qui est conçue pour générer un signal de détection (44) sur la base d'un signal de sortie (42) du récepteur de lumière (25),
**caractérisé en ce que**
l'unité d'évaluation (29) est en outre conçue pour générer, sur la base d'une comparaison du signal de détection (44) généré avec un signal de détection attendu, un signal d'altération de la détection (47) qui indique une altération de la qualité de détection due à des contaminations (32, 33) de la vitre avant (20),
la comparaison du signal de détection généré (44) avec le signal de détection attendu comprenant le calcul de la différence entre les valeurs de position d'objet respectives dérivées des signaux de détection.

2. Capteur optique selon la revendication 1,
dans lequel le signal d'altération de la détection (47) est un signal numérique à plusieurs niveaux ou un signal analogique.

3. Capteur optique selon la revendication 1 ou 2,
dans lequel l'unité d'évaluation (29) est conçue pour effectuer une moyenne temporelle du signal de détection généré (44) et pour déduire la valeur de position de l'objet concerné à partir du signal de détection moyenné dans le temps.

4. Capteur optique selon l'une des revendications précédentes,
la comparaison du signal de détection généré (44) avec le signal de détection attendu comprenant la détermination d'une erreur de position géométrique de l'objet et d'une dégradation énergétique du signal.

5. Capteur optique selon la revendication 4,
dans lequel, pour générer le signal d'altération de la détection (47), l'erreur de position géométrique de l'objet est pondérée plus fortement que la dégradation énergétique du signal.

6. Capteur optique selon l'une des revendications précédentes,
dans lequel l'unité d'évaluation (29) est conçue de telle sorte que, lors de la génération du signal de détection (44), elle modifie d'abord le signal de sortie (42) du récepteur de lumière (25) au moyen d'un traitement du signal afin de compenser les contaminations (32, 33) de la vitre avant (20), de sorte que le signal d'altération de la détection (47) indique l'altération de la qualité de détection due aux contaminations (32, 33) de la vitre avant (20) en tenant compte de la compensation.

7. Capteur optique selon la revendication 6,
dans lequel le récepteur de lumière (25) comporte plusieurs éléments de réception (31) et le traitement du signal comprend une pondération différente des signaux individuels (42) des éléments de réception (31).

8. Capteur optique selon la revendication 6 ou 7,
dans lequel le capteur optique (11) comporte un émetteur de lumière supplémentaire (37) présentant une caractéristique de rayonnement diffus, et le traitement du signal comprend une évaluation d'un signal de réception attribuable à l'émetteur de lumière supplémentaire (37).

9. Capteur optique selon l'une des revendications précédentes,
dans lequel l'unité d'évaluation (29) est conçue pour générer le signal d'altération de la détection (47) sur la base d'un degré de contamination de la vitre avant (20) et d'une dépendance enregistrée de l'altération de la qualité de détection par rapport au degré de contamination.

10. Capteur optique selon la revendication 9,
la dépendance de l'altération de la qualité de détection par rapport au degré de contamination étant donnée par une fonction de transfert non linéaire (51).

11. Capteur optique selon la revendication 9 ou 10,
dans lequel l'unité d'évaluation (29) est conçue pour établir la dépendance de l'altération de la qualité de détection par rapport au degré de contamination à l'aide de données d'apprentissage.

12. Capteur optique selon l'une des revendications précédentes,
dans lequel l'unité d'évaluation (29) est conçue pour générer un signal de commutation (49) lorsque le signal d'altération de la détection (47) dépasse une valeur seuil.
